# EUROPÄISCHE PATENTSCHRIFT

(11) **EP 3 340 400 B1**
(45) Veröffentlichungstag und Bekanntmachung des Hinweises auf die Patenterteilung: **11.09.2019**
(21) Anmeldenummer: 16206365.5
(22) Anmeldetag: 22.12.2016
(51) Int. Cl.: H01R 43/28

(54) **VORRICHTUNG UND VERFAHREN ZUM MANIPULIEREN EINES INNENLEITERS**
METHOD AND DEVICE FOR MANIPULATING AN INTERNAL CONDUCTOR
DISPOSITIF ET PROCÉDÉ DE MANIPULATION D'UN CONDUCTEUR INTERNE

(43) Veröffentlichungstag der Anmeldung: 27.06.2018
(73) Patentinhaber: KOMAX HOLDING AG, 6036 Dierikon (CH)
(72) Erfinder: Wicki, Beat, 6043 Adligenswil (CH)
(74) Vertreter: EGLI-EUROPEAN PATENT ATTORNEYS

(56) Entgegenhaltungen:
- EP-A1- 3 104 471
- DE-A1- 3 934 401

## Beschreibung

Die Erfindung betrifft eine Vorrichtung und ein Verfahren zum Manipulieren eines Innenleiters aus einer Mehrzahl von Innenleitern an einem abgemantelten Ende eines Mantelkabels.

Elektrische Mantelkabel weisen ein Bündel Innenleitern auf, wobei das Innenleiterbündel insgesamt von einem elektrisch isolierenden Material, dem sogenannten Mantel, umgeben ist. Der Mantel bildet eine äussere Isolationsschicht. Jeder der Innenleiter ist aus einzelnen Litzen gebildet, welche jeweils wiederum von einem elektrisch isolierenden Material, typischerweise einer Kunststoffisolation als eine innere Isolationsschicht, umgeben sind. Die Litzen sind beispielsweise verdrillte Litzen aus Kupfer oder aus Aluminium.

Mantelkabel werden oftmals automatisch verarbeitet, beispielsweise in einem Abisoliervorgang, einem Nachschneidevorgang, einem Crimpvorang und dergleichen. Zur automatischen Verarbeitung von Mantelkabeln ist es zweckmässig, die Innenleiter einzeln zu halten und zugänglich zu machen.

Ein automatisches Vereinzelungsverfahren wird mit Hilfe einer Vereinzelungsvorrichtung durchgeführt. Bei einem Vereinzelungsvorgang können die Innenleiter auf eine definierte Weise beispielsweise in eine Befestigungsvorrichtung eingebracht werden, die als Halterung für die weitere Verarbeitung der Innenleiter dient.

Aus der US 2014/0115855 A1 sind eine Vorrichtung und ein Verfahren zum Vereinzeln von Innenleitern bekannt. Die Innenleiter werden mit Hilfe von Druckluft voneinander getrennt. Eine Luftdüse wird zum Aufbringen eines im Wesentlichen senkrechten Luftstroms auf das abgemantelte Ende eines Mantelkabels gerichtet, bei welchem die Innenleiter als ein Bündel freiliegen.

DE 39 34 401 A1 beschreibt eine Vorrichtung zum Sortieren von Adern eines Kabels. Verdrillte, unterschiedlich farbige Adern eines an einem Ende abisolierten Kabels werden mit Hilfe einer Ausstreufeinrichtung, Lippen, zangenartigen Spanneinrichtungen, einer Farberkennungseinrichtung und einer Kammaufnahme sortiert.

EP 3 104 471 A1 beschreibt eine Kabelbearbeitungseinrichtung zur Bearbeitung von Kabeladern eines mehradrigen Kabels. Trennelemente sind zwischen die Kabeladern einfahrbar und kämmend entlang der Kabeladern fahrbar. Die Trennelemente sind sternförmig angeordnet und in radialer Richtung gegen die Kabellängsachse des Kabels bewegbar.

Bei dem herkömmlichen Verfahren wird tendenziell, jedoch nicht in jedem Fall, derjenige Innenleiter von dem Bündel von Innenleitern vereinzelt bzw. in einen abgewinkelten Verlauf relativ zu der Kabelachse überführt, welcher sich am weitesten von der Luftdüse entfernt befindet. Das Vereinzelungsverhalten ist bei dem herkömmlichen Verfahren jedoch undefiniert. Daher ergibt sich bei dem herkömmlichen Verfahren der Nachteil, dass sich die nach dem Einsatz der Luftdüse abgewinkelt verlaufenden Innenleiter undefiniert im Raum befinden. Dies erschwert eine anschliessende Zuordnung der Innenleiter, beispielsweise, um diese einzeln und in definierter Reihenfolge in eine geeignete Befestigungsvorrichtung zu überführen.

Es ist eine Aufgabe der vorliegenden Erfindung, eine Vorrichtung oder ein Verfahren zum Manipulieren eines Innenleiters aus einer Mehrzahl von Innenleitern an einem abgemantelten Ende eines Mantelkabels anzugeben, wobei ein definierter Innenleiter manipuliert bzw. vereinzelt und zuverlässig zugeordnet werden kann.

Die Aufgabe wird gelöst durch eine Vorrichtung gemäss den Merkmalen des Anspruchs 1 oder durch ein Verfahren gemäss den Merkmalen des Anspruchs 6.

Gemäss einem Aspekt der Erfindung weist eine Vorrichtung zum Manipulieren eines Innenleiters, aus einer Mehrzahl von Innenleitern an einem abgemantelten Ende eines Mantelkabels, eine Manipuliereinrichtung auf, die von einer Ausgangslage um eine Schwenkachse verschwenkbar ist, wobei die Schwenkachse im Wesentlichen senkrecht zu der Axialrichtung des Endes des Mantelkabels verläuft, wobei das Ende des Mantelkabels in einer Ebene, die im Wesentlichen senkrecht zu der Achse des Endes des Mantelkabels verläuft, relativ zu der Manipuliereinrichtung ausrichtbar ist; wobei die Manipuliereinrichtung eine Nadel, die in der Ausgangslage der Manipuliereinrichtung entlang einer Nadelachse auf ein Ende des Innenleiters zu bewegbar ist, und einen Innenleiter-Greifer zum Greifen des Endes des Innenleiters aufweist.

Gemäss einem Aspekt der Erfindung wird ein Verfahren zum Manipulieren eines Innenleiters aus einer Mehrzahl von Innenleitern an einem abgemantelten Ende eines Mantelkabels mittels einer Manipuliereinrichtung angegeben, wobei die Manipuliereinrichtung eine Nadel, die in der Ausgangslage der Manipuliereinrichtung entlang einer Nadelachse auf das Ende des Innenleiters zu bewegbar ist, und einen Innenleiter-Greifer zum Greifen des Endes des Innenleiters aufweist. Das Verfahren umfasst ein Ausrichten des Endes des Mantelkabels relativ zu der Manipuliereinrichtung derart, dass die Nadelachse mit der Innenleiter-Achse des Innenleiters fluchtet; ein Bewegen der Nadel auf das Ende des Innenleiters zu, und Herstellen eines mechanischen Kontakts zwischen der Nadel und dem Ende des Innenleiters; ein Verschwenken der Manipuliereinrichtung um eine Schwenkachse, wobei die Schwenkachse im Wesentlichen senkrecht zu der Axialrichtung des Endes des Mantelkabels verläuft; und ein Greifen des Endes des Innenleiters mittels des Innenleiter-Greifers.

Ein Mantelkabel mit einer Mehrzahl von Innenleitern verläuft entlang einer Kabelachse in einer Hauptausdehnungsrichtung des Kabels. Diese Kabelachse definiert die Axialrichtung, zu welcher senkrecht der Querschnitt des Mantelkabels bzw. des Bündels an Innenleitern definiert ist. Die Kabelachse des Mantelkabels verläuft zentral in dem Bündel von Innenleitern.

Das Ende des Mantelkabels ist ein Bereich, welcher einen Endbereich des Mantelkabels bildet und welcher eine gewisse Ausdehnung entlang der Hauptausdehnungsrichtung hat. In diesem Bereich verläuft das Mantelkabel typischerweise geradlinig oder im Wesentlichen geradlinig.

Das Ende des Mantelkabels ist von der äusseren Isolierung (dem Mantel) befreit, d. h. abgemantelt, so dass die Mehrzahl von Innenleitern - im Regelfall mit ihrer jeweiligen inneren Isolierung, welche die einzelnen Litzen der Innenleiter umgibt - freiliegt. Jeder Innenleiter verläuft typischerweise zumindest im Bereich des Endes des Mantelkabels in der Kabelachse oder parallel zu der Kabelachse. Die Innenleiter-Achse eines Innenleiters verläuft damit zumindest in dem Endbereich in der Axialrichtung der Kabelachse des Mantelkabels, also in der Kabelachse des Mantelkabels oder parallel zu der Kabelachse des Mantelkabels.

In der Ausgangslage der Manipuliereinrichtung verläuft die Nadelachse der Nadel in etwa in Axialrichtung, d. h. in etwa auf der Kabelachse oder parallel zur Kabelachse. Die Ausgangslage entspricht einer nicht-verschwenkten Position der Manipuliereinrichtung. Die Nadel ist entlang der Nadelachse auf das Ende eines Innenleiters aus der Mehrzahl von Innenleitern zu bewegbar. Die Nadel ist also in Längsrichtung beweglich. Die Bewegung der Nadel ist typischerweise mittels einer Ansteuerung eines geeigneten Nadelmotors derart bewegbar, dass die Nadel bei einer entsprechenden Ausfahr-Ansteuerung aus einer Ausgangsposition der Nadel auf das Ende des Innenleiters zu bewegt wird und damit in eine Endposition der Nadel gebracht wird, und dass die Nadel bei einer entsprechenden Einfahr-Ansteuerung aus der Endposition zurück in die Ausgangsposition bewegt wird.

Das Ende des Mantelkabels kann relativ zu der Manipuliereinrichtung so ausgerichtet werden, dass die Nadelachse der Nadel der Manipuliereinrichtung mit der Innenleiter-Achse des zu manipulierenden Innenleiters fluchtet. Typischerweise erfolgt ein solches Ausrichten in einer der beiden Richtungen oder in beiden Richtungen in derjenigen Ebene, auf welcher die Kabelachse im Wesentlichen senkrecht steht.

Wenn die Nadel weiter in Richtung des Endes des Innenleiters bewegt wird, wird ein mechanischer Kontakt zwischen der Nadel und dem Ende des Innenleiters hergestellt. Mit anderen Worten: Die Nadel sticht in das Ende des Innenleiters, typischerweise zwischen die Litzen des Innenleiters. Zumindest bei einer Bewegung in einer Richtung, die nicht in der Nadelachse verläuft - z. B. in einer Richtung quer zu der Richtung der Nadelachse - folgt damit das Ende des Innenleiters der Bewegung der Nadel.

Die Manipuliereinrichtung ist aus der Ausgangslage um eine Schwenkachse verschwenkbar, die im Wesentlichen senkrecht zu der Axialrichtung des Endes des Mantelkabels verläuft. Das Ende des Innenleiters folgt dieser Schwenkbewegung infolge des mechanischen Kontakts durch die Nadel. Der Innenleiter kann damit derart manipuliert werden, dass sein betreffendes Ende auf eine definierte Weise in einer definierten Richtung aus der Axialrichtung heraus verschwenkt wird. Der Innenleiter kann damit zuverlässig definiert vereinzelt werden.

Der Innenleiter-Greifer der Manipuliereinrichtung kann den so vereinzelten Innenleiter sicher greifen, woraufhin die Nadel in ihre Ausgangslage zurückgezogen werden kann. Es kann so sichergestellt werden, dass der Innenleiter-Greifer einen gezielt bestimmten Innenleiter aus der Mehrzahl von Innenleitern greift.

Vorteilhafte Weiterbildungen der erfindungsgemässen Lösung ergeben sich aus den abhängigen Ansprüchen.

Bei Ausführungsformen umfasst die Vorrichtung zum Manipulieren eines Innenleiters ferner eine Steuerungseinrichtung, eine Bilderfassungseinrichtung und eine Ausrichtungseinrichtung, wobei die Bilderfassungseinrichtung konfiguriert ist zum Erfassen eines Bildes des Endes des Mantelkabels und zum Ausgeben des Bildes an die Steuerungseinrichtung, und wobei die Ausrichtungseinrichtung konfiguriert ist zum Empfangen eines Ausrichtungssignals von der Steuerungseinrichtung und zum Ausrichten des Endes des Mantelkabels relativ zu der Manipuliereinrichtung anhand des Ausrichtungssignals. Gemäss der Ausführungsform ist die Steuerungseinrichtung zum Erzeugen des Ausrichtungssignals unter Verwendung des Bildes von der Bilderfassungseinrichtung konfiguriert, um zu veranlassen, dass die Nadelachse mit der Axialrichtung des Innenleiters fluchtet.

Die Bilderfassungseinrichtung ist beispielsweise eine Digitalkamera, welche preiswert und leicht verfügbar ist. Typischerweise ist die Bilderfassungseinrichtung so ausgerichtet, dass sie ein Bild in der Ebene senkrecht zu der Kabelachse erfasst. Die Steuerungseinrichtung und die Ausrichtungseinrichtung können als separate Steuerungen oder auch als eine integrierte Steuerung ausgebildet sein. Beispielsweise ist die Steuerungseinrichtung und/oder die Ausrichtungseinrichtung als Standard-Computer, als Industriecomputer, als integrierte Schaltung oder dergleichen ausgebildet.

Die Steuerungseinrichtung ist auf geeignete Weise mit der Bilderfassungseinrichtung verbunden und dazu konfiguriert, ein empfangenes Bild oder eine Abfolge von empfangenen Bildern von der Bilderfassungseinrichtung auszuwerten. Eine Möglichkeit für eine Auswertung ist ein geeignetes Bildanalyseverfahren. Die Steuerungseinrichtung erzeugt ein Ausrichtungssignal auf Grundlage der Auswertung, um zu veranlassen, dass die Nadelachse mit der Innenleiter-Achse des Innenleiters fluchtet.

Die Steuerungseinrichtung ist dazu konfiguriert, das Ausrichtungssignal an die Ausrichtungseinrichtung auszugeben. Die Ausrichtungseinrichtung ist beispielsweise eine Ansteuerungseinrichtung zum Ansteuern eines Motors oder mehrerer Motoren, welche an der Vorrichtung zum Manipulieren des Innenleiters vorgesehen sind und welche mechanisch derart mit der Vorrichtung zum Manipulieren des Innenleiters verbunden sind, dass sie eine zum Ausrichten der Nadelachse geeignete Bewegung ausführen können.

Bei Ausführungsformen ist die Steuerungseinrichtung ferner zum Selektieren eines vorab festgelegten oder festlegbaren Innenleiters aus der Mehrzahl von Innenleitern konfiguriert. Beispielsweise wird ein zu manipulierender Innenleiter vorab ausgewählt und als derjenige Innenleiter bestimmt, dessen Innenleiter-Achse mit der Nadelachse fluchten soll.

Bei Ausführungsformen weist die Vorrichtung ferner eine Rotationseinrichtung zum Drehen, typischerweise zum selektiven Drehen, einer Befestigungsvorrichtung für den Innenleiter des Mantelkabels auf.

In Bezug auf das Verfahren umfasst dieses bei Ausführungsformen ferner ein Selektieren eines vorab festgelegten oder festlegbaren Innenleiters aus der Mehrzahl von Innenleitern und ein Drehen, typischerweise ein selektives Drehen, einer Befestigungsvorrichtung für den Innenleiter des Mantelkabels unter Berücksichtigung des selektierten Innenleiters. Beispielsweise bestimmt die Steuerungseinrichtung aus dem erfassten Bild von der Bilderfassungseinrichtung, welcher Innenleiter sich an einer definierten Position befindet, z. B. welcher Innenleiter sich zuoberst befindet. Die Befestigungsvorrichtung wird anschliessend so gedreht, dass sich eine dem bestimmten Innenleiter zugeordnete Halteeinrichtung der Befestigungsvorrichtung im Bereich der definierten Position befindet.

Der bestimmte Innenleiter kann anschliessend in die zugeordnete Halteeinrichtung der Befestigungsvorrichtung eingebracht werden. Bei Ausführungsformen umfasst das Verfahren das Einbringen des Endes des Innenleiters in die Halteeinrichtung der Befestigungsvorrichtung.

Bei Ausführungsformen umfasst das verfahrensgemässe Einbringen des Endes des Innenleiters in die Halteeinrichtung ferner ein Verschwenken der Manipuliereinrichtung um die Schwenkachse in eine Endlage, so dass das Ende des Innenleiters in den Bereich der Halteeinrichtung der Befestigungsvorrichtung gebracht wird; und ein Bewegen des Endes des Innenleiters relativ zur Halteeinrichtung in eine Halteposition für das Ende des Innenleiters.

Bei Ausführungsformen weist die Vorrichtung ferner einen Sammelgreifer zum Greifen einer Mehrzahl der Innenleiter, typischerweise zum Greifen sämtlicher Innenleiter, an dem Ende des Mantelkabels auf. Der Sammelgreifer ist beispielsweise so ausgeführt, dass er ansteuerbar geschlossen und geöffnet werden kann. Das Schliessen und Öffnen des Sammelgreifers kann über einen pneumatischen Antrieb, einen elektrischen Antrieb oder einen anderen geeigneten Antrieb erfolgen. Beispielsweise ist die Schliesskraft des Sammelgreifers einstellbar. Der Sammelgreifer kann auch eine Zwischenposition zwischen dem geöffneten Zustand und dem geschlossenen Zustand aufweisen, wobei es in der Zwischenposition ermöglicht wird, dass ein Innenleiter verschwenkt oder weggebogen wird, wobei die übrigen Innenleiter weiterhin sicher von dem Sammelgreifer umfasst werden.

Weitere Einzelheiten der Erfindung und insbesondere eine beispielhafte Ausführungsform der erfindungsgemässen Vorrichtung und der erfindungsgemässen Verwendung werden im Folgenden anhand der beigefügten Zeichnungen erläutert.

Es zeigen:
- Fig. 1: eine perspektivische schematische Ansicht einer Vorrichtung zum Manipulieren eines Innenleiters, aus einer Mehrzahl von Innenleitern an einem abgemantelten Ende eines Mantelkabels gemäss einer Ausführungsform der Erfindung;
- Fig. 2: eine perspektivische schematische Ansicht von Einzelheiten der Vorrichtung aus Fig. 1;
- Fig. 3: eine perspektivische Ansicht einer Befestigungsvorrichtung für die Innenleiter an einem abgemantelten Ende eines Mantelkabels, die an einer Vorrichtung zum Manipulieren gemäss einer Ausführungsform der Erfindung verwendet werden kann;
- Fig. 4: eine Draufsicht auf die Befestigungsvorrichtung aus Fig. 3;
- Fig. 5: eine schematische Draufsicht auf eine beispielhafte Halteeinrichtung an der Befestigungsvorrichtung aus den Fig. 4 und 5;
- Fig. 6: eine perspektivische schematische Ansicht von Einzelheiten der Vorrichtung aus Fig. 1 bei der Durchführung eines erfindungsgemässen Verfahrens;
- Fig. 7: eine perspektivische schematische Ansicht von Einzelheiten der Vorrichtung aus Fig. 1 bei der Durchführung eines erfindungsgemässen Verfahrens;
- Fig. 8: eine perspektivische schematische Ansicht von Einzelheiten der Vorrichtung aus Fig. 1 bei der Durchführung eines erfindungsgemässen Verfahrens;
- Fig. 9: eine perspektivische schematische Ansicht von Einzelheiten der Vorrichtung aus Fig. 1 bei der Durchführung eines erfindungsgemässen Verfahrens;
- Fig. 10: eine perspektivische schematische Ansicht von Einzelheiten der Vorrichtung aus Fig. 1 bei der Durchführung eines erfindungsgemässen Verfahrens;
- Fig. 11: eine perspektivische schematische Ansicht von Einzelheiten der Vorrichtung aus Fig. 1 bei der Durchführung eines erfindungsgemässen Verfahrens; und
- Fig. 12: eine Draufsicht auf Teile der Vorrichtung aus Fig. 1.

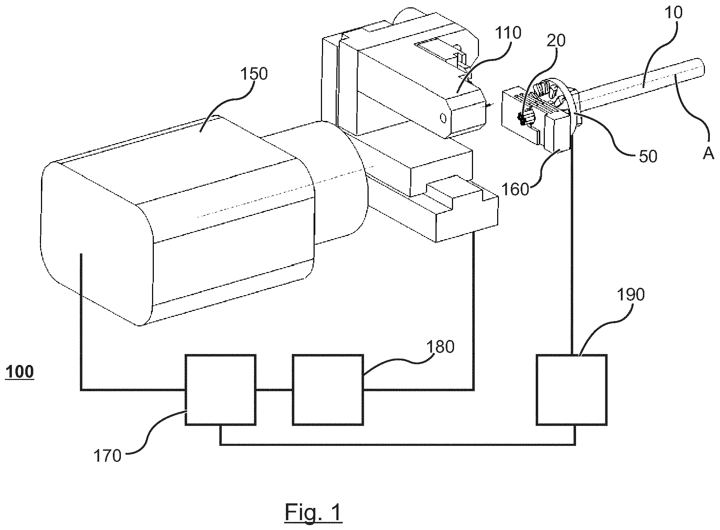

Fig. 1 zeigt eine perspektivische schematische Ansicht einer Vorrichtung 100 zum Manipulieren eines Innenleiters 20, aus einer Mehrzahl von Innenleitern 20 an einem abgemantelten Ende eines Mantelkabels 10 gemäss einer Ausführungsform der Erfindung. Sofern es bei der Erläuterung nicht auf eine Unterscheidung der einzelnen Innenleiter in dem Bündel von Innenleitern ankommt, ist ein Innenleiter mit dem Bezugszeichen 20 versehen. Das Mantelkabel 10 verläuft im Wesentlichen geradlinig entlang einer Kabelachse, welche eine Axialrichtung A definiert. Jeder Innenleiter 20 an dem abgemantelten Ende des Mantelkabels 10 verläuft in Fig. 1, die den Zustand vor einem Manipulationsvorgang der Innenleiter 20 zeigt, ebenfalls geradlinig entlang jeweils einer Innenleiter-Achse und parallel zur Kabelachse.

Das Mantelkabel weist ein Ende auf, an welchem die äussere Isolierung - der Mantel - des Mantelkabels 10 entfernt ist und die Innenleiter 20 freiliegen. Jeder Innenleiter 20 ist aus einem verdrillten Litzenbündel aus Aluminiumlitze oder Kupferlitze gebildet, welches mit einer Innenleiter-Isolierung umgeben ist. Die Erfindung ist nicht auf Innenleiter 20 mit Litze beschränkt, und es können auch auf andere Weise ausgebildete Innenleiter 20 mit der erfindungsgemässen Befestigungsvorrichtung verwendet werden.

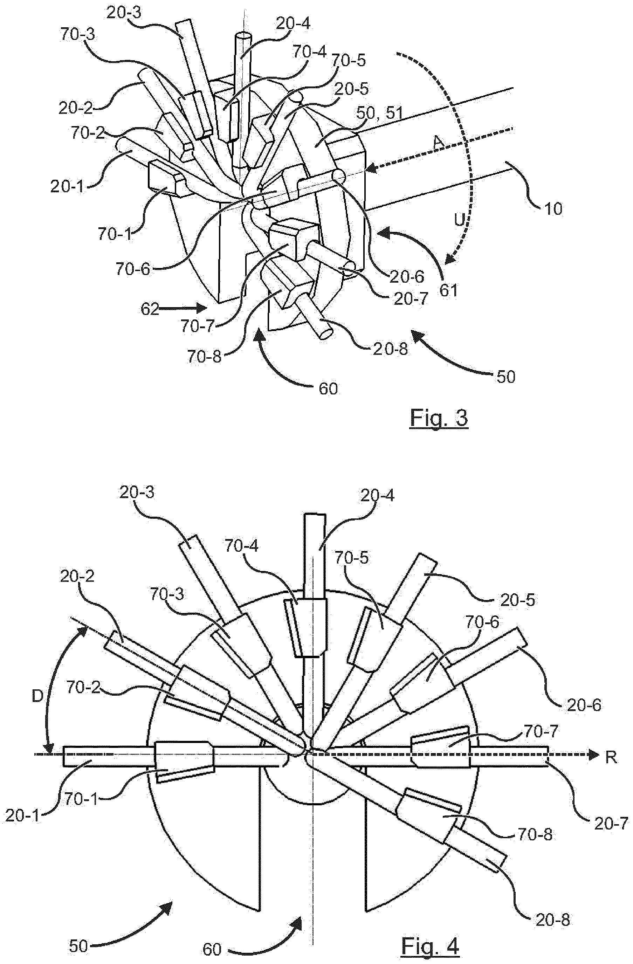

Das Ende des Mantelkabels ist durch eine Durchführöffnung einer Befestigungsvorrichtung 50 hindurchgeführt und wird mittels zweier Greifbacken eines Sammelgreifers 160 gehalten. Die Befestigungsvorrichtung wird später noch unter Bezugnahme auf die Fig. 3 und 4 detailliert erläutert. Der Sammelgreifer 160 ist beispielsweise pneumatisch oder elektrisch derart ansteuerbar, dass er aus einer geöffneten Position in die in Fig. 1 dargestellte geschlossene Position gebracht werden kann und mit seinen Greifbacken das Bündel von Innenleitern umfassen und halten kann.

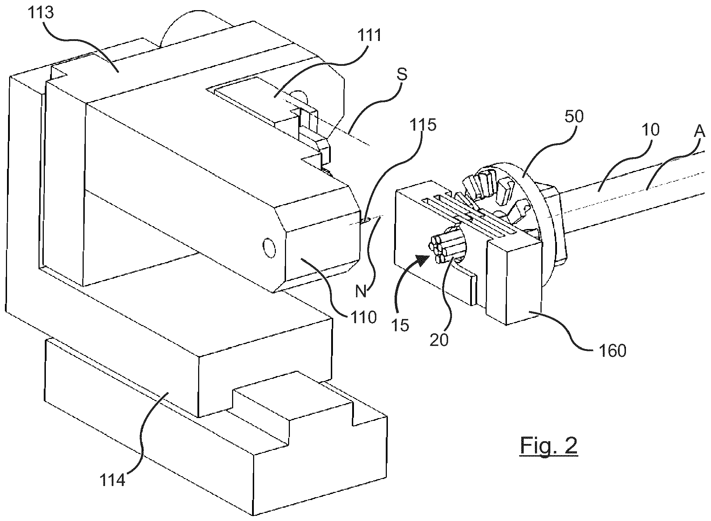

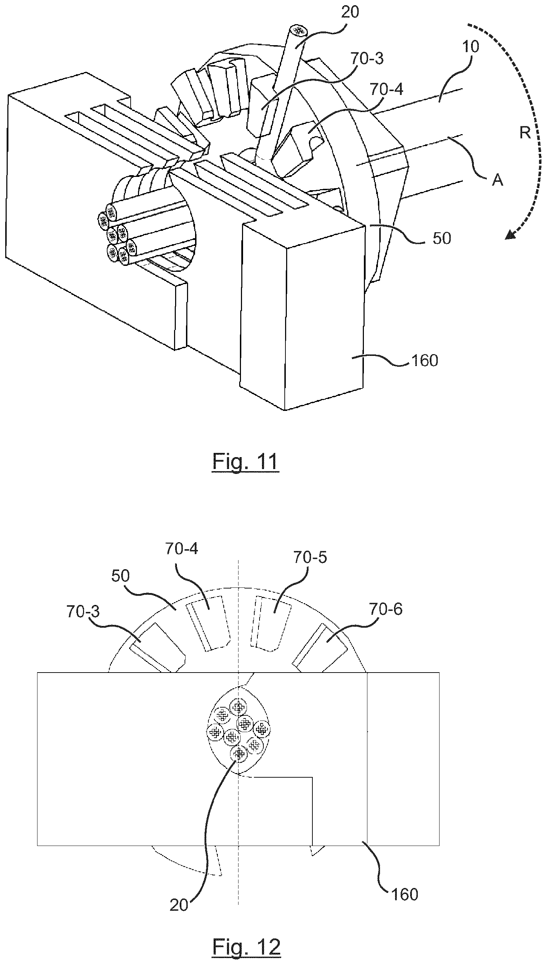

Eine Digitalkamera als eine Bilderfassungseinrichtung 150 ist so angeordnet, dass sie ein Bild des Bündels von Innenleitern 20 erfasst. In der in Fig. 1 dargestellten Ausführungsform verläuft eine Bildachse der Digitalkamera in der Axialrichtung, d. h. parallel zur Kabelachse, oder die Bildachse fällt mit der Kabelachse zusammen. Ein Beispiel für ein Bild, welches die Digitalkamera erfasst, ist in Fig. 12 dargestellt. Zwischen der Bilderfassungseinrichtung 150 und der Anordnung aus Sammelgreifer 160, Befestigungsvorrichtung 50 und Mantelkabel 10 ist eine Manipuliereinrichtung 110 angeordnet, die einen später noch beschriebenen Innenleiter-Greifer 111 aufweist und auf einer Kombination aus einer vertikalen Verfahreinrichtung 113 und einer horizontalen Verfahreinrichtung 114 (siehe Fig. 2) in einer Ebene senkrecht zu der Axialrichtung bewegbar ist.

Die Bilderfassungseinrichtung 150 ist mit einer Steuerungseinrichtung 170 verbunden, welche wiederum mit einer Ausrichtungseinrichtung 180 und einer Rotationseinrichtung 190 verbunden ist. Die Ausrichtungseinrichtung 180 dient der Ansteuerung der vertikalen Verfahreinrichtung 113 und der horizontalen Verfahreinrichtung 114, während die Rotationseinrichtung 190 eine selektive (ansteuerbare) Rotation der Befestigungsvorrichtung 50 um die Axialrichtung herbeiführen kann.

In Fig. 2 ist die Anordnung der Manipuliereinrichtung 110 relativ zu dem Sammelgreifer 160, der Befestigungsvorrichtung 50 und dem Mantelkabel 10 detaillierter dargestellt. Das Ende des Mantelkabels ist insgesamt mit 15 bezeichnet.

Die Manipuliereinrichtung 110 ist um eine Schwenkachse S verschwenkbar. Die Schwenkachse S verläuft im Wesentlichen senkrecht zu der Axialrichtung des Mantelkabels. In der Darstellung gemäss Fig. 2 befindet sich die Manipuliereinrichtung 110 in einer Ausgangslage, d. h. in einer nicht-verschwenkten Position. Die Manipuliereinrichtung 110 weist eine Nadel 115 auf, die entlang von deren Nadelachse N geradlinig bewegbar ist, beispielsweise mittels eines geeigneten Elektromotors, der entsprechend ansteuerbar ist. In der Ausgangslage der Manipuliereinrichtung 110 verläuft die Nadelachse N der Nadel 115 in etwa in Axialrichtung. Bei einer entsprechenden Ausfahr-Ansteuerung wird die Nadel 115 aus der in Fig. 2 dargestellten Ausgangsposition der Nadel auf das Ende des Innenleiters 20 zu bewegt und damit in eine Endposition der Nadel gebracht wird. Entsprechend wird die Nadel 115 bei einer entsprechenden Einfahr-Ansteuerung aus der Endposition zurück in die Ausgangsposition bewegt.

Fig. 3 und Fig. 4 zeigen die Befestigungsvorrichtung 50 für die Innenleiter 20 auf detailliertere Weise. Die Befestigungsvorrichtung 50 ist an der Vorrichtung zum Manipulieren gemäss den hierin beschriebenen Ausführungsformen der Erfindung verwendbar.

Die beispielhaft dargestellte Befestigungsvorrichtung 50 ist für ein Mantelkabel 10 mit acht Innenleitern 20-1...20-8 oder für ein Mantelkabel mit bis zu acht Innenleitern 20-1...20-8 ausgelegt. Die Erfindung ist jedoch nicht auf diese Anzahl von Innenleitern beschränkt, und sie umfasst auch Befestigungsvorrichtungen 50, die für weniger oder für mehr als acht Innenleiter 20 ausgelegt sind.

In einer Platte 51 der Befestigungsvorrichtung 50 ist eine Durchführöffnung 60 ausgebildet, die in der dargestellten Ausführungsform als Einlegeschlitz ausgebildet ist. Der Einlegeschlitz ist in der Ausführungsform aus einer in der Platte 51 zentralen kreisrunden Öffnung gebildet, die in Radialrichtung ausgedehnt ist, so dass die Platte 51 im Querschnitt in etwa die Form eines grossen C hat. Ein Mantelkabel wird entlang seiner Achse, welche die Axialrichtung A definiert, von einer Eintrittsseite 61 aus durch die Durchführöffnung 60 geschoben bzw. so in den Einlegeschlitz gelegt, dass es auf der Eintrittsseite 61 in die Durchführöffnung 60 eintritt. Entsprechend tritt das abgemantelte Ende 15 des Mantelkabels 10 auf der Austrittsseite 62 der Einführöffnung aus.

Die Befestigungsvorrichtung 50 weist Halteeinrichtungen 70 auf, wobei hier wieder als nicht-beschränkendes Beispiel insgesamt acht Halteeinrichtungen 70-1...70-8 dargestellt sind. In der Darstellung gemäss Fig. 2 sind die Innenleiter 20-1...20-8 des Mantelkabels 10 jeweils in einer zugehörigen Halteeinrichtung 70-1...70-8 befestigt bzw. gehalten. Die Darstellung gemäss Fig. 2 zeigt also einen Zustand, in welchem die Innenleiter eines Mantelkabels 10 bereits vereinzelt worden sind und an einer jeweils zugehörigen oder zugeordneten Halteeinrichtung 70-1...70-8 der Befestigungsvorrichtung 50 angeordnet sind. Die einzelnen Halteeinrichtungen 70-1...70-8 sind in der dargestellten Ausführungsform als Klauen ausgebildet, was später noch erläutert wird.

Die Halteeinrichtungen 70-1...70-8 sind radial um die Durchführöffnung 60 herum auf einem Kreisbogen angeordnet, wie aus der Draufsicht aus Fig. 4 besser ersichtlich ist. Benachbarte Halteeinrichtungen 70-1...70-8, mit Ausnahme des Paars von äusseren Halteeinrichtungen 70-8 zu 70-1, sind jeweils in einem gleichen Winkelabstand D zueinander angeordnet. Mit anderen Worten: Die inneren benachbarten Halteeinrichtungen 70-1...70-8 sind äquidistant angeordnet. In der Darstellung in Fig. 3 ist aus Gründen der Einfachheit nur der Winkelabstand D zwischen der Halteeinrichtung 70-1 und der ihr benachbarten Halteeinrichtung 70-2 gezeigt; der gleiche Winkelabstand D ist jedoch auch bei den weiteren inneren benachbarten Paaren von Halteeinrichtungen vorhanden, nämlich bei den Paaren 70-2 zu 70-3, 70-3 zu 70-4, 70-4 zu 70-5, 70-5 zu 70-6, 70-6 zu 70-7 und 70-7 zu 70-8.

Die Halteeinrichtungen 70-1...70-8 können auch in Radialrichtung R versetzt angeordnet sein. Eine versetzte Anordnung schliesst eine äquidistante Anordnung der Halteeinrichtungen 70-1...70-8, wie hierin erläutert, nicht aus.

Die Innenleiter 20-1...20-8 sind in jeweils eine zugehörige Halteeinrichtung 70-1...70-8 einlegbar. Mit der radialen Anordnung der Halteeinrichtungen 70-1...70-8 können alle in den jeweiligen Halteeinrichtungen 70-1...70-8 angeordneten Innenleiter 20-1...20-8 die gleiche Länge haben. Ausserdem ist es ausreichend, wenn das abgemantelte Ende 15 des Mantelkabels 10, also der Teil, an welchem die äussere Isolierung entfernt ist, relativ kurz ist.

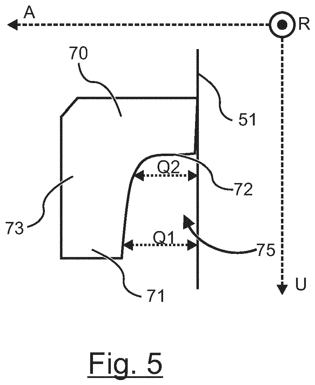

Die Halteeinrichtungen 70 sind jeweils als Klauen 71 ausgebildet, wie in Fig. 5 näher gezeigt. Fig. 5 zeigt hierbei eine schematische Draufsicht auf die Klaue 71 in einer Ebene bei Betrachtung in Radialrichtung R.

Typischerweise kann ein Innenleiter 20 unter eine Klaue 71 geklemmt werden und damit auf einfache und effektive Art und Weise an der Klaue 71 befestigt werden. Auch ist eine Klauenform vorteilhaft bei der automatisierten Handhabung, insbesondere der automatisierten Vereinzelung, von Innenleitern, wie hierin beschrieben. Wenn im Verlauf eines hierin beschriebenen Verfahrens ein Innenleiter 20 in den Bereich vor der Klaue 71 gebracht wird, braucht die Befestigungsvorrichtung 50 nur in die entsprechende Richtung gedreht zu werden, um den Innenleiter 20 in der Klaue 71 zu befestigen.

Die Klaue 71 weist eine Anlagefläche 72 für den Innenleiter 20 auf, wobei die Anlagefläche 72 im Wesentlichen in Axialrichtung A verläuft. Ein Verlauf in Axialrichtung bezeichnet die Haupt-Ausdehnungsrichtung der Anlagefläche 72 und schliesst eine Krümmung, wie weiter unten erläutert, der Anlagefläche 72 nicht aus.

Des Weiteren weist die Klaue 71 einen Vorsprung 73 auf. Der Vorsprung verläuft in Radialrichtung R. Wiederum bezeichnet ein Verlauf in Radialrichtung die Haupt-Ausdehnungsrichtung des Vorsprungs 73 und schliesst eine Krümmung des Vorsprungs nicht aus.

Die Anlagefläche 72 und der Vorsprung 73 definieren einen Aufnahmebereich 75 für den Innenleiter 20. Wie in dem Beispiel in Fig. 5 dargestellt, ist der Vorsprung 73 so geformt, dass sich der Aufnahmebereich 75 ausgehend von der offenen Seite zur Anlagefläche 72 hin in seinem Querschnitt verjüngt. Beispielhaft ist in Fig. 5 gezeigt, dass der Querschnitt Q1 im Bereich der offenen Seite grösser ist als der Querschnitt Q2 im Bereich der Anlagefläche 72. Ausserdem verläuft der Querschnitt im Beispiel aus Fig. 5 gekrümmt. Die Krümmung kann auch näherungsweise eine Kreisbogenform aufweisen.

Variierende Aussendurchmesser der Innenleiter 20, die in dem Aufnahmebereich 75 aufzunehmen sind, sind durch eine solche Formgebung möglich, bei gleichzeitig erhöhter Zuverlässigkeit für die Befestigung des Innenleiters 20 im Aufnahmebereich 75.

Die Halteeinrichtungen 70 sind jedoch nicht auf eine Klauenform beschränkt. Beispielsweise ist es denkbar, dass zumindest eine Halteeinrichtung 70 ein Greifelement umfasst. Typischerweise umfassen sämtliche Halteeinrichtungen 70 jeweils ein Greifelement. Ein Greifelement kann als Greifer mit einem aktiven Betätigungselement zum aktiven Öffnen des Greifelements ausgebildet sein, wenn der Innenleiter 20 eingelegt wird. Beispielsweise dient ein Federelement als Rückstellelement zum anschliessenden Schliessen des Greifelements.

Es ist auch denkbar, dass zumindest eine Halteeinrichtung 70 eine Axial-Klemmeinrichtung umfasst. Typischerweise umfassen sämtliche Halteeinrichtungen 70 jeweils eine Axial-Klemmeinrichtung. Eine Axial-Klemmeinrichtung bzw. jede Axial-Klemmeinrichtung ist dazu eingerichtet, einen eingelegten Innenleiter 20 bei Beaufschlagung mit einer Kraft in Axialrichtung A klemmend zu halten. Typischerweise wirkt die Kraft in Axialrichtung A entgegen der Einführungsrichtung bzw. Durchführungsrichtung des Endes 15 des Mantelkabels 10. Mit anderen Worten: Es ist denkbar, dass die beispielsweise klauenförmig ausgestaltete Axial-Klemmeinrichtung derart ausgebildet ist, dass ein eingelegter Innenleiter 20 zum Befestigen bzw. Halten in Richtung der Achse des Mantelkabels 10 in die Axial-Klemmeinrichtung gedrückt bzw. geklemmt wird.

Die Befestigungsvorrichtung 50 kann auch ein Positionierungselement aufweisen, beispielsweise ein Vierkantteil oder dergleichen. Dieses Positionierungselement ermöglicht eine Drehung auf Hinwirken der Rotationseinrichtung 190, so dass die radiale Ausrichtung der Befestigungsvorrichtung 50 auf einfache Weise verändert bzw. gedreht wird. Beispielsweise ist mit Hilfe des Positionierungselements die Befestigungsvorrichtung 50 kontinuierlich drehbar, oder sie ist in Schritten drehbar, welche der Winkelteilung bzw. dem Winkelabstand oder der halben Winkelteilung bzw. dem halben Winkelabstand der Halteeinrichtungen 70 entsprechen. Drehbarkeit bezieht sich hier auf eine Drehung um die Achse bzw. eine Drehung in der Ebene, in welcher die Austrittsseite 62 der Durchführungsöffnung 60 liegt.

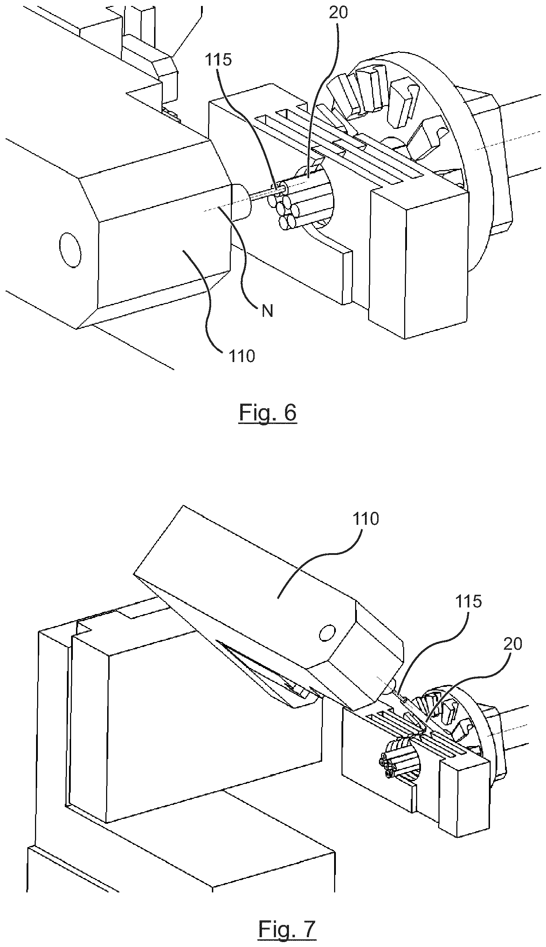

Nachfolgend wird unter Bezugnahme auf die Fig. 6 bis 11 ein Verfahren gemäss einer Ausführungsform der Erfindung näher beschrieben.

Die Bilderfassungseinrichtung 150 erfasst in der Ausgangslage der Manipuliereinrichtung 110 ein Bild, das in etwa demjenigen aus Fig. 12 entspricht. Ggf. wird die Manipuliereinrichtung 110 zur Bilderfassung mit Hilfe der vertikalen Verfahreinrichtung 113 und/oder der horizontalen Verfahreinrichtung 114 aus dem Erfassungsbereich bewegt. In Fig. 12 erkennbar sind der Sammelgreifer 160, der ein Bündel von Innenleitern 20 umfasst, sowie einige Halteeinrichtungen 70-3, 70-4, 70-5, 70-6 der Befestigungsvorrichtung 50. Das Ende 15 des Mantelkabels 10, also die freiliegenden Innenleiter 20, sind durch die Durchführöffnung 60 der Befestigungsvorrichtung 50 geführt. Die Isolierungen der Innenleiter 20 sind beispielsweise farblich unterschiedlich, und die Bilderfassungseinrichtung 150 ist eine Farbkamera. Beispielsweise kann dadurch eine Identifizierung der einzelnen Innenleiter 20 erfolgen.

Eine in der Steuerungseinrichtung 170 ablaufende Steuersoftware entscheidet, welcher Innenleiter 20 als nächstes in eine vorgegebene Halteeinrichtung 70 der Befestigungsvorrichtung 50 eingebracht werden soll. In der gezeigten Ausführungsform wird die Manipuliereinrichtung 110 nach oben um die Schwenkachse S geschwenkt. Daher ist es vorteilhaft, wenn die Rotationseinrichtung 190 neben einer Rotation der Befestigungsvorrichtung 50 auch eine Rotation des Endes 15 des Mantelkabels 10 veranlassen kann. Es ist jedoch auch denkbar, die gesamte Manipuliereinrichtung 110 um die Kabelachse zu drehen.

Die Steuerungseinrichtung 170 veranlasst mittels der Rotationseinrichtung 190, dass die Befestigungsvorrichtung 50 so gedreht wird, dass sich die Halteeinrichtung 70, die zu dem ausgewählten und zu manipulierenden Innenleiter 20 korrespondiert, in einer definierten Lage befindet, welche es nach einer Verschwenkbewegung der Manipuliereinrichtung 110 ermöglicht, dass der betreffende Innenleiter 20 in die zugehörige Halteeinrichtung 70 eingebracht wird.

Die Steuerungseinrichtung 170 bestimmt die genaue Lage des ausgewählten und zu manipulierenden Innenleiters 20, um die Nadel 150 zu positionieren. In der dargestellten Ausführungsform ist für die Positionierung die Manipuliereinrichtung 110 in der Ebene senkrecht zur Axialrichtung A mittels der vertikalen Verfahreinrichtung 113 und der horizontalen Verfahreinrichtung 114 bewegbar. Es ist aber auch möglich, dass alternativ oder zusätzlich das Ende 15 des Mantelkabels 10 zusammen mit der Befestigungsvorrichtung 50 und einem ggf. vorhandenen Sammelgreifer 160 in der Ebene senkrecht zu der Axialrichtung A bewegbar ist.

In der Ansicht in Fig. 6 ist die Nadel 115 entlang der Nadelachse N zwischen die Litzen des ausgewählten Innenleiters 20 bewegt worden, so dass ein mechanischer Kontakt zwischen der Nadel 115 und dem Innenleiter 20 hergestellt ist. Die Nadel 115 fährt also aus und sticht zwischen die Litzen in den Innenleiter 20. Das Bündel von Innenleitern 20 ist im geschlossenen Sammelgreifer 160 platziert.

Wie in Fig. 7 gezeigt, wird der Sammelgreifer 160 etwas geöffnet (in eine Zwischenstellung verbracht). Anschliessend wird die Manipuliereinrichtung 110 um einen ersten Winkelbetrag geschwenkt, wodurch der Innenleiter 20 gebogen wird. In der Darstellung in Fig. 7 wird der Innenleiter 20 nach oben gebogen.

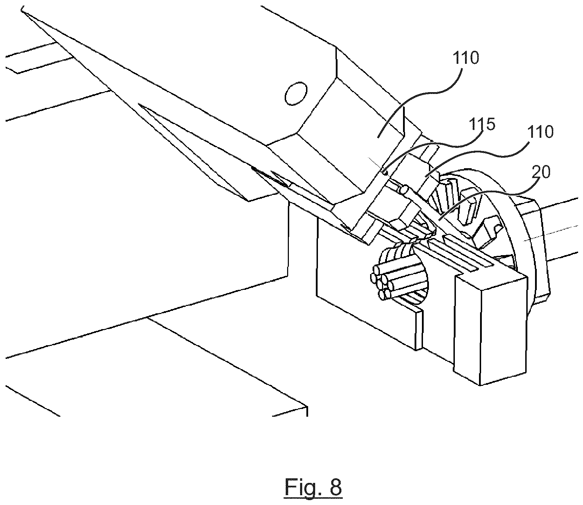

In Fig. 8 ist der Innenleiter-Greifer 111 ausgefahren und greift den vereinzelten Innenleiter 20. Die Nadel 115 ist in der zurückgezogenen Stellung. Typischerweise wird die Nadel 115 in die zurückgezogene Stellung gebracht, nachdem der Innenleiter-Greifer 111 der vereinzelten Innenleiter 20 gegriffen hat.

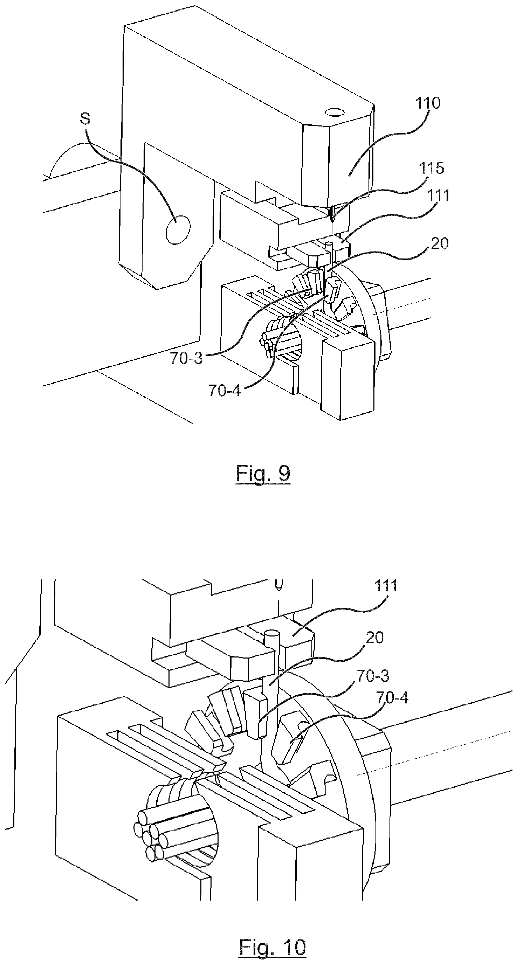

Anschliessend wird die Manipuliereinrichtung 111 weiter in Richtung der Endposition verschwenkt. In Fig. 9 ist die Manipuliereinrichtung 111 so weit verschwenkt, dass der gegriffene Innenleiter 20 in etwa senkrecht zur Axialrichtung A verläuft. Der Innenleiter 20 steht in einem Winkel von ungefähr 90° von der Axialrichtung A und verläuft zumindest näherungsweise in Radialrichtung. Beispielsweise soll der Innenleiter in die Halteeinrichtung 70-3 eingebracht werden. Der Innenleiter 20 befindet sich in dem gezeigten Beispiel in Fig. 9 zwischen den Halteeinrichtungen 70-3 und 70-4.

In Fig. 10 ist die Befestigungsvorrichtung 50 weiter gedreht worden, so dass der Innenleiter 20 in die Halteeinrichtung 70-3 eingebracht wurde. Der vereinzelte Innenleiter 20 ist in dem Beispiel also unter die gewünschte Klaue 71 geklemmt worden. Anschliessend wird der Innenleiter-Greifer 111 wieder geöffnet.

In Fig. 11 sind das Ende 15 des Mantelkabels 10 und die Befestigungsvorrichtung 50 synchron um die Winkelteilung (den Winkelabstand D) der Halteeinrichtungen 70, also den Winkel zwischen zwei benachbarten Klauen 71, gedreht. Im Anschluss kann das Verfahren, wie hierin beschrieben, wiederholt werden, um einen weiteren Innenleiter 20 zu manipulieren.

Die Erfindung ist nicht auf eine hierin beispielhaft offenbarte Befestigungsvorrichtung 50 mit einer radialen Anordnung der Halteeinrichtungen 70 beschränkt. Es ist auch denkbar, mit Hilfe der Vorrichtung 100 eine Befestigungsvorrichtung mit vereinzelten Innenleitern zu bestücken, bei welcher die Innenleiter parallel zueinander angeordnet werden. Beispielsweise könnte eine solche parallele Befestigungsvorrichtung rechtwinklig zur Kabelebene angeordnet sein und nach der Bestückung gemeinsam mit den Innenleitern in die Kabelebene geschwenkt werden.

## Patentansprüche

1. Vorrichtung (100) zum Manipulieren eines Innenleiters (20, 20-1...20-8), aus einer Mehrzahl von Innenleitern (20, 20-1...20-8) an einem abgemantelten Ende (15) eines Mantelkabels (10), umfassend:
eine Manipuliereinrichtung (110), die von einer Ausgangslage um eine Schwenkachse (S) verschwenkbar ist, wobei die Schwenkachse (S) im Wesentlichen senkrecht zu der Axialrichtung (A) des Endes des Mantelkabels (10) verläuft,
wobei das Ende (15) des Mantelkabels (10) in einer Ebene, die im Wesentlichen senkrecht zu der Achse des Endes (15) des Mantelkabels (10) verläuft, relativ zu der Manipuliereinrichtung (110) ausrichtbar ist;
wobei die Manipuliereinrichtung (110) einen Innenleiter-Greifer (111) zum Greifen des Endes des Innenleiters (20) umfasst, dadurch gekennzeicnet, dass die Manipuliereinrichtung (110) weiter umfasst:
eine Nadel (115), deren Nadelachse (N) in der Ausgangslage der Manipuliereinrichtung (110) in etwa in der Axialrichtung (A) verläuft, wobei die Nadel (115) in der Ausgangslage der Manipuliereinrichtung (110) entlang der Nadelachse (N) auf ein Ende des Innenleiters (20) zu bewegbar ist.

2. Vorrichtung (100) nach Anspruch 1, wobei die Vorrichtung ferner umfasst:
eine Steuerungseinrichtung (170);
eine Bilderfassungseinrichtung (150), die konfiguriert ist zum Erfassen eines Bildes des Endes (15) des Mantelkabels (10), und zum Ausgeben des Bildes an die Steuerungseinrichtung (170);
eine Ausrichtungseinrichtung (180), die konfiguriert ist zum Empfangen eines Ausrichtungssignals von der Steuerungseinrichtung (170) und zum Ausrichten des Endes des Mantelkabels relativ zu der Manipuliereinrichtung (110) anhand des Ausrichtungssignals,
wobei die Steuerungseinrichtung (170) zum Erzeugen des Ausrichtungssignals unter Verwendung des Bildes von der Bilderfassungseinrichtung (150) konfiguriert ist, um zu veranlassen, dass die Nadelachse (N) mit der Innenleiter-Achse des Innenleiters (20, 20-1...20-8) fluchtet.

3. Vorrichtung (100) nach Anspruch 2, wobei die Steuerungseinrichtung (170) ferner zum Selektieren eines vorab festgelegten oder festlegbaren Innenleiters (20, 20-1...20-8) aus der Mehrzahl von Innenleitern (20, 20-1...20-8) konfiguriert ist.

4. Vorrichtung (100) nach einem der vorhergehenden Ansprüche, wobei die Vorrichtung ferner eine Rotationseinrichtung (190) zum Drehen, typischerweise zum selektiven Drehen, einer Befestigungsvorrichtung (50) für den Innenleiter des Mantelkabels umfasst.

5. Vorrichtung (100) nach einem der vorhergehenden Ansprüche, wobei die Vorrichtung ferner einen Sammelgreifer (160) zum Greifen einer Mehrzahl der Innenleiter (20, 20-1...20-8), typischerweise zum Greifen sämtlicher Innenleiter (20, 20-1...20-8) an dem Ende (15) des Mantelkabels (10) umfasst.

6. Verfahren zum Manipulieren eines Innenleiters (20, 20-1...20-8) aus einer Mehrzahl von Innenleitern (20, 20-1...20-8) an einem abgemantelten Ende (15) eines Mantelkabels (10) mittels einer Vorrichtung (100) nach Anspruch 1,
**dadurch gekennzeichnet, dass** das Verfahren umfasst:
Ausrichten des Endes (15) des Mantelkabels (10) relativ zu der Manipuliereinrichtung (110) derart, dass die Nadelachse (N) mit der Innenleiter-Achse des Innenleiters (20, 20-1...20-8) fluchtet;
Bewegen der Nadel (115) auf das Ende des Innenleiters (20, 20-1...20-8) zu, und Herstellen eines mechanischen Kontakts zwischen der Nadel (15) und dem Ende des Innenleiters;
Verschwenken der Manipuliereinrichtung (110) um eine Schwenkachse (S), wobei die Schwenkachse (S) im Wesentlichen senkrecht zu der Axialrichtung (A) des Endes (15) des Mantelkabels (10) verläuft;
Greifen des Endes des Innenleiters (20, 20-1...20-8) mittels des Innenleiter-Greifers (111).

7. Verfahren nach Anspruch 6, wobei das Verfahren ferner umfasst:
Einbringen des Endes des Innenleiters (20, 20-1...20-8) in eine Halteeinrichtung (70, 70-1...70-8) einer Befestigungsvorrichtung (50).

8. Verfahren nach Anspruch 7, wobei das Verfahren ferner umfasst:
Selektieren eines vorab festgelegten oder festlegbaren Innenleiters (20, 20-1...20-8) aus der Mehrzahl von Innenleitern (20, 20-1...20-8);
Drehen der Befestigungsvorrichtung (50) für den Innenleiter (20, 20-1...20-8) unter Berücksichtigung des selektierten Innenleiters (20, 20-1...20-8).

9. Verfahren nach Anspruch 7 oder 8, wobei das Einbringen des Innenleiters (20, 20-1...20-8) in die Halteeinrichtung (70, 70-1...70-8) umfasst:
Verschwenken der Manipuliereinrichtung um die Schwenkachse in eine Endlage, so dass das Ende des Innenleiters (20, 20-1...20-8) in den Bereich der Halteeinrichtung (70, 70-1...70-8) der Befestigungsvorrichtung (50) gebracht wird;
Bewegen des Endes des Innenleiters (20, 20-1...20-8) relativ zur Halteeinrichtung (70, 70-1...70-8) in eine Halteposition für das Ende des Innenleiters (20, 20-1...20-8).

## Claims

1. A device (100) for manipulating an inner conductor (20, 20-1...20-8), from a plurality of inner conductors (20, 20-1...20-8) at a stripped end (15) of a sheathed cable (10), comprising:
a manipulation device (110), which is pivotable from an initial position about a pivot axis (S), wherein the pivot axis (S) extends essentially perpendicularly to the axial direction (A) of the end of the sheathed cable (10),
wherein the end (15) of the sheathed cable (10) is alignable relative to the manipulation device (110) in a plane which extends essentially perpendicular to the axis of the end (15) of the sheathed cable (10) ;
wherein the manipulation device (110) comprises an inner conductor gripper (111) for gripping the end of the inner conductor (20), **characterized in that** the manipulation device (110) further comprises:
a needle (115), the needle axis (N) of which extends approximately in the axial direction (A) in the initial position of the manipulation device (110), wherein the needle (115) is movable toward an end of the inner conductor (20) along the needle axis (N) in the initial position of the manipulation device (110).

2. The device (100) according to claim 1, wherein the device further comprises:
a control device (170);
an image capture device (150) which is configured to capture an image of the end (15) of the sheathed cable (10) and to output the image to the control device (170);
an alignment device (180) which is configured to receive an alignment signal from the control device (170) and to align the end of the sheathed cable relative to the manipulation device (110) based on the alignment signal;
wherein the control device (170) is configured to generate the alignment signal using the image from the image capture device (150) to cause the needle axis (N) to be aligned with the inner conductor axis of the inner conductor (20, 20-1...20-8).

3. The device (100) according to claim 2, wherein the control device (170) is further configured to select a previously determined or determinable internal conductor (20, 20-1...20-8) from the plurality of internal conductors (20, 20-1...20-8).

4. The device (100) according to one of the preceding claims, wherein the device further comprises a rotation device (190) for rotating, typically for selectively rotating, a fastening device (50) for the inner conductor of the sheathed cable.

5. The device (100) according to one of the preceding claims, wherein the device further comprises a collection gripper (160) for gripping a plurality of the inner conductors (20, 20-1...20-8), typically for gripping all of the inner conductors (20, 20-1...20-8) at the end (15) of the sheathed cable (10).

6. A method for manipulating an inner conductor (20, 20-1...20-8) from a plurality of inner conductors (20, 20-1...20-8) at a stripped end (15) of a sheathed cable (10) by means of a device (100) according to claim 1,
**characterized in that** the method comprises:
aligning the end (15) of the sheathed cable (10) relative to the manipulation device (110) such that the needle axis (N) is aligned with the inner conductor axis of the inner conductor (20, 20-1...20-8);
moving the needle (115) toward the end of the inner conductor (20, 20-1...20-8), and establishing a mechanical contact between the needle (15) and the end of the inner conductor;
pivoting the manipulation device (110) about a pivot axis (S), wherein the pivot axis (S) extends essentially perpendicular to the axial direction (A) of the end (15) of the sheathed cable (10);
gripping the end of the inner conductor (20, 20-1...20-8) by means of the inner conductor gripper (111) .

7. The method according to claim 6, wherein the method further comprises:
inserting the end of the inner conductor (20, 20-1...20-8) into a holding device (70, 70-1...70-8) of a fastening device (50).

8. The method according to claim 7, wherein the method further comprises:
selecting a previously determined or determinable internal conductor (20, 20-1...20-8) from the plurality of internal conductors (20, 20-1...20-8);
rotating the fastening device (50) for the inner conductor (20, 20-1...20-8) taking into account the selected inner conductor (20, 20-1...20-8).

9. The method according to claim 7 or 8, wherein the insertion of the inner conductor (20, 20-1...20-8) into the holding device (70, 70-1...70-8) comprises:
pivoting of the manipulation device about the pivot axis into an end position such that the end of the inner conductor (20, 20-1...20-8) is brought into the region of the holding device (70, 70-1...70-8) of the fastening device (50);
moving the end of the inner conductor (20, 20-1...20-8) relative to the holding device (70, 70-1...70-8) into a holding position for the end of the inner conductor (20, 20-1...20-8).

## Revendications

1. Dispositif (100) de manipulation d'un conducteur interne (20, 20-1...20-8) parmi une pluralité de conducteurs internes (20, 20-1...20-8) à une extrémité dénudée (15) d'un câble enrobé (10), comprenant :
un dispositif de manipulation (110) qui est pivotable depuis une position de départ autour d'un axe de pivotement (S), l'axe de pivotement (S) s'étendant sensiblement perpendiculairement au sens axial (A) de l'extrémité du câble enrobé (10),
l'extrémité (15) du câble enrobé (10) étant orientable par rapport au dispositif de manipulation (110) dans un plan qui s'étend sensiblement, en position de départ du dispositif de manipulation (110), perpendiculairement à l'axe de l'extrémité (15) du câble enrobé (10) ;
le dispositif de manipulation (110) comprenant en outre un préhenseur de conducteur interne (111) pour saisir l'extrémité du conducteur externe (20), **caractérisé en ce que** le dispositif de manipulation (110) comprend en outre :
une aiguille (115) dont l'axe d'aiguille (N), dans la position de départ du dispositif de manipulation (110), s'étend approximativement dans le sens axial (A), l'aiguille (115) étant, dans la position de départ du dispositif de manipulation (110), déplaçable le long de l'axe d'aiguille (N) jusqu'à une extrémité du conducteur interne (20).

2. Dispositif (100) selon la revendication 1, ce dispositif comprenant en outre :
un dispositif de commande (170) ;
un dispositif d'enregistrement d'images (150) qui est conçu pour enregistrer une image de l'extrémité (15) du câble enrobé (10), et pour délivrer une image au dispositif de commande (170) ;
un dispositif d'orientation (180) qui est conçu pour recevoir un signal d'orientation du dispositif de commande (170) et pour orienter l'extrémité du câble enrobé par rapport au dispositif de manipulation (110) à partir du signal d'orientation,
le dispositif de commande (170) étant conçu pour générer le signal d'orientation en utilisant l'image du dispositif d'enregistrement d'images (150) afin de faire en sorte que l'axe d'aiguille (N) soit aligné avec l'axe de conducteur interne du conducteur interne (20, 20-1...20-8).

3. Dispositif (100) selon la revendication 2, dans lequel le dispositif de commande (170) est en outre conçu pour sélectionner un conducteur interne défini ou définissable préalablement (20, 20-1...20-8) parmi la pluralité de conducteurs internes (20, 20-1...20-8).

4. Dispositif (100) selon une des revendications précédentes, ce dispositif comprenant en outre un dispositif de rotation (190) pour faire tourner, typiquement faire tourner sélectivement, un dispositif de fixation (50) pour le conducteur interne du câble enrobé.

5. Dispositif (100) selon une des revendications précédentes, ce dispositif comprenant en outre un préhenseur collecteur (160) pour saisir une pluralité de conducteurs internes (20, 20-1...20-8), typiquement pour saisir tous les conducteurs internes (20, 20-1...20-8) à l'extrémité (15) du câble enrobé (10).

6. Procédé de manipulation d'un conducteur interne (20, 20-1...20-8) parmi une pluralité de conducteurs internes (20, 20-1...20-8), à une extrémité dénudée (15) d'un câble enrobé (10) au moyen d'un dispositif (100) selon la revendication 1,
**caractérisé en ce que** ce procédé comprend :
l'orientation de l'extrémité (15) du câble enrobé (10) par rapport au dispositif de manipulation (10) de manière à ce que l'axe d'aiguille (N) soit aligné avec l'axe de conducteur interne du conducteur interne (20, 20-1...20-8) ;
déplacement de l'aiguille (115) vers l'extrémité du conducteur interne (20, 20-1...20-8) et établissement d'un contact mécanique entre l'aiguille (15) et l'extrémité du conducteur interne ;
pivotement du dispositif de manipulation (110) autour d'un axe de pivotement (S), l'axe de pivotement (S) s'étendant sensiblement perpendiculairement au sens axial (A) de l'extrémité (15) du câble enrobé (10) ;
saisie de l'extrémité du conducteur interne (20, 20-1...20-8) au moyen du préhenseur de conducteur interne (111).

7. Procédé selon la revendication 6, ce procédé comprenant en outre :
l'introduction de l'extrémité du conducteur interne (20, 20-1...20-8) dans un dispositif de retenue (70, 70-1...70-8) d'un dispositif de fixation (50).

8. Procédé selon la revendication 7, ce procédé comprenant en outre :
la sélection d'un conducteur interne (20, 20-1...20-8) défini ou définissable préalablement parmi la pluralité de conducteurs internes (20, 20-1...20-8) ;
la rotation du dispositif de fixation (50) pour le conducteur interne (20, 20-1...20-8) en tenant compte du conducteur interne sélectionné (20, 20-1...20-8).

9. Procédé selon la revendication 7 ou 8, dans lequel l'introduction du conducteur interne (20, 20-1...20-8) dans le dispositif de retenue (70, 70-1...70-8) comprend :
le pivotement du dispositif de manipulation autour de l'axe de pivotement vers une position terminale de manière à ce que l'extrémité du conducteur interne (20, 20-1...20-8) soit amenée au niveau du dispositif de retenue (70, 70-1...70-8) du dispositif de fixation (50) ;
le déplacement de l'extrémité du conducteur interne (20, 20-1...20-8) par rapport au dispositif de retenue (70, 70-1...70-8) jusqu'à une position de retenue pour l'extrémité du conducteur interne (20, 20-1...20-8).
